# EUROPÄISCHE PATENTSCHRIFT

(11) **EP 0 617 818 B1**
(45) Veröffentlichungstag und Bekanntmachung des Hinweises auf die Patenterteilung: **02.01.1997**
(21) Anmeldenummer: 93924423.2
(22) Anmeldetag: 21.10.1993
(51) Int. Cl.: G07C 9/00, G06K 19/07

(54) **DATENTRÄGER**
DATA CARRIER
SUPPORT DE DONNEES

(30) Priorität: 22.10.1992 AT 2088/92; 31.12.1992 AT 2605/92
(43) Veröffentlichungstag der Anmeldung: 05.10.1994
(73) Patentinhaber: SKIDATA COMPUTER GESELLSCHAFT m.b.H., A-5083 Gartenau (AT)
(72) Erfinder: KOCZNAR, Wolfram, A-6020 Innsbruck (AT); WALLERSTORFER, Kurt, A-5204 Irrsdorf 130 (AT); WINDHAGER, Christian, A-5061 Elsbethen (AT)
(74) Vertreter: Hofinger, Engelbert, DDr.
(86) Internationale Anmeldenummer: AT9300160
(87) Internationale Veröffentlichungsnummer: WO9409450

(56) Entgegenhaltungen:
- EP-A- 0 316 157
- WO-A-88/03296
- DE-C- 3 935 364
- US-A- 4 812 634
- US-A- 5 138 142

## Beschreibung

Die Erfindung betrifft einen Datenträger zur Verwendung in Zutritts-, Identifikations- und/oder Kontrollsystemen, mit einer Datensendeempfangseinheit zur Kommunikation mit mindestens einer Codier- und/oder Lesestation, mit einem nichtflüchtigen, elektrisch lösch- und programmierbaren Speicher, mit einer Sendeempfangslogik, die die Daten in den Speicher einschreibt und aus dem Speicher ausliest, mit einem Flüssigkristalldisplay, mit einer Einrichtung zur Sichtbarmachung der im Speicher enthaltenen Daten auf dem Flüssigkristalldisplay, und mit einer Einrichtung zur Stromversorgung, die eine im Datenträger angeordnete Stromquelle aufweist.

Aus der EP-A 327 541 (=WO-A-88/03296) ist ein derartiger Datenträger bekannt, der von einer eingebauten Stromquelle betrieben wird. Relativ viel Energie benötigen dabei das Senden von Daten bei der Kommunikation mit der Codier- und/oder Lesestation sowie das Schalten des Flüssigkristalldisplays. Die Energieversorgung mittels einer nicht aufladbaren, austauschbaren Batterie bringt die bekannten Probleme hinsichtlich der Entsorgung der verbrauchten Batterien, hinsichtlich einer eventuellen Undichtheit des zu verschließenden Gehäuses, usw. Wird eine aufladbare Batterie oder eine Solarzelle eingesetzt, so ergeben sich Probleme hinsichtlich der Dimensionierung usw. Im Falle von Solarzellen kommt noch hinzu, daß der Datenträger in der Dämmerung oder Dunkelheit gegebenenfalls nicht einsatzbereit ist.

EP-A-0 316 157, US-A-4 812 634 und US-A-5 138 142 offenbaren Datenträger mit interner Stromquelle und externer Stromversorgungsmöglichkeit. Bei externer Versorgung wird die interne Stromquelle abgeschaltet. Aus der DE-C-39 35 364 ist eine Chipkarte bekannt, die wahlweise über Kontakte oder kontaktlos (über Spulen) versorgt wird, aber keine interne Stromquelle aufweist.

Es ist weiters bekannt, die benötigte Energie vom Kontroll- oder Lesegerät berührungslos zu übertragen, wobei eine Reihe von Möglichkeiten bekannt sind, beispielsweise induktiv gemäß der EP-A 400 764 oder 198 642, beispielsweise mittels eine Photozelle bestrahlendem Licht gemäß der EP-A 168 836, usw. In diesen Ausführungen steht Energie in ausreichenden Mengen zur Verfügung, es ergibt sich jedoch der Nachteil, daß die Anzeige der Speicherinhaltes an die Anwesenheit des Kontroll- oder Lesegerätes gebunden ist. Die Information über die gespeicherten Daten steht daher nicht zu beliebigen Zeitpunkten zur Verfügung.

Die Erfindung hat es sich nun zur Aufgabe gestellt, einen Datenträger der eingangs genannten Art zu schaffen, bei dem die erwähnten Probleme behoben oder zumindest verringert sind. Der Datenträger soll sowohl Energie für die gelegentliche Datenübertragung als auch für die unabhängige beliebige Datenanzeige in der jeweils erforderlichen Menge zur Verfügung haben.

Erfindungsgemäß wird dies dadurch erreicht, daß die Stromversorgungseinrichtung aus zwei elektrisch voneinander unabhängigen Teilen besteht, deren erster Teil die im Datenträger angeordnete Stromquelle ist, daß mit dem ersten Teil der Stromversorgungseinrichtung das Flüssigkristalldisplay und die Einrichtung zur Sichtbarmachung des Speicherinhaltes verbunden sind und daß der zweite Teil der Stromversorgungseinrichtung durch ein der Sendeempfangslogik und dem Speicher zugeordnetes kontaktloses Übertragungselement zum Empfangen von Energie aus einer in der Codier- und/oder Lesestation vorgesehenen zweiten Stromquelle gebildet ist. Die Aufteilung der Stromversorgung in zwei voneinander unabhängige Stromquellen erlaubt es die Stromversorgung der einzelnen Bestandteile wesentlich besser auf den Bedarf abzustimmen. Die für den Datenverkehr benötigte Energie kann so von der Codier- und/oder Lesestation berührungslos übertragen werden, während die im Datenträger vorgesehene Stromquelle zu jedem beliebigen Zeitpunkt nur die relativ geringe, für die Flüssigkristallanzeige benötigte Energiemenge zu liefern braucht, und damit kleiner dimensioniert werden kann. Dies erleichtert die konstruktive Gestaltung des Datenträgers wesentlich, wobei es für die Kontrollfunktion auch keine Rolle spielt, wenn die im Datenträger enthaltene Stromquelle ausgefallen ist. Die Übertragung des Arbeitsstromes für den Speicher und die Sendeempfangslogik erfolgt bevorzugt induktiv mittels einer Spule, und als im Datenträger enthaltene Stromquelle ist bevorzugt eine Solarzelle vorgesehen. Die im Datenträger gespeicherten Daten sind damit jederzeit anzeigbar, es kann aber auch, um Betätigungstasten einzusparen, die Flüssigkristallanzeige mit einer automatischen Umschaltung versehen sein, sodaß verschiedene Daten der Reihe nach sich wiederholend abgelesen werden können, beispielsweise der Wert des Datenträgers, das Ende des Gültigkeitszeitraumes, Details und Informationen über die Initialisierung und den berechtigten Inhaber, usw. Der Datenträger ist dadurch zeitlich unbeschränkt einsetzbar, stellt bei Verwendung einer Solarzelle ein autarkes System dar, läßt sich durch Neuprogrammierung wiederverwenden und ist auch für jene Verwendungszwecke geeignet, in denen der Wert sich ändert, der den Speicherinhalt anzeigt.

Die Einrichtung zur Sichtbarmachung des Speicherinhaltes kann beispielsweise einen Interpreter umfassen, bevorzugt ist jedoch ein Mikroprozessor vorgesehen, der die im Speicher enthaltenen Daten in eine visuell verständliche Form bringt. Als Speicher dient insbesondere ein E²PROM. Die Datenübertragung erfolgt berührungslos in einem niederfrequenten Magnetfeld (beispielsweise ca. 120 kHz) durch elektromagnetische Kopplung. Der Datenträger arbeitet somit rein passiv durch Bedämpfung des Lesefeldes der Codier- und/oder Lesestation, wobei über die Sendeempfangseinrichtung auch die Stromversorgung der Sendeempfangslogik aus dem Lesefeld erfolgt.

In einer ersten konstruktiven Ausführung weist der Datenträger insbesondere die Form einer Scheibe auf, und ist daher ähnlich einer Münze ausgebildet, wobei an der einen Seite der Scheibe das Flüssigkristalldisplay und die Solarzelle angeordnet sind, und an der zweiten Seite der Scheibe eine spiralig angeordnete Antenne der Datensendeempfangseinheit aufgedruckt ist. Die Scheibe besteht insbesondere aus einem geeigneten Kunststoff und deren Umfang ist in einer bevorzugten Ausführung von einem metallischen, durch einen Schlitz unterbrochenen Ring eingefaßt, der eine Aussteifung und mechanische Verstärkung der Scheibe bewirkt. Durch die Unterbrechung des Ringes wird die Datenübertragung und die Energieübertragung nicht behindert, die bei einem geschlossenen Ring zumindest gestört würde. Ein als Scheibe ausgeführter Datenträger kann als Ersatz einer Münze, deren Wert eine bestimmte oder eine sich verringernde Größe aufweist, beispielsweise in Automaten verwendet werden. In Parkgaragen kann ein derartiger Datenträger beim Verlassen der Garage in den Ausfahrschranken eingegeben und bei der Einfahrt wieder ausgegeben werden. Die Münzenform des Datenträgers gestattet eine bei Münzen praktizierte Behandlung (Zählen, Sammeln, Vereinzeln, Sortieren, Prüfen etc.), sodaß vorhandene Einrichtungen hiezu benützt werden können.

Münzenartige Datenträger sind im Prinzip beispielsweise aus der EP-A 147 099 bekannt. Der jeweils verkörperte Wert des Datenträgers ist jedoch nicht direkt ersichtlich, sondern kann nur mittels der Codier- und/oder Lesestation festgestellt werden.

Für Anwendungen beispielsweise als Liftkarte od.dgl. sieht eine weitere Ausführung vor, daß die Scheibe in eine Halterung eingesetzt ist, die eine von einer Federspule ausziehbare Schnur aufweist. Das freie Ende der Schnur kann außen an der Kleidung angehängt werden, und der Datenträger wird samt seiner Halterung an ein Lesegerät heranbewegt, indem die Schnur von der Spule abgezogen wird, die sich anschließend wieder aufrollt. Da gegebenenfalls die Länge der auf dem Datenträger angeordneten Antenne nicht ausreicht, sieht eine weitere Ausführung vor, daß in der Halterung der Scheibe eine Antennenverlängerung angeordnet ist, die an einen freiliegenden Kontakt der Antenne anschließt.

Nachstehend wird nun die Erfindung anhand der Figuren der beiliegenden Zeichnungen näher beschrieben, ohne darauf beschränkt zu sein.

Es zeigen:
- Fig. 1: ein Prinzipschaltbild einer ersten Ausführungsform des Datenträgers,
- Fig. 2: ein Prinzipschaltbild einer zweiten Ausführung des Datenträgers,
- Fig. 3: eine Schrägansicht einer scheibenförmigen Ausführungsform des Datenträgers,
- Fig. 4: einen Schnitt durch den Datenträger,
- Fig. 5: eine Rückansicht des Datenträgers,
- Fig. 6: eine Draufsicht auf einen in eine Halterung eingesetzten Datenträger,
- Fig. 7 bis 9: Schnitte nach den Linien VII-VII, VIII-VIII und IX-IX der Fig. 6,
- Fig. 10: in Schrägansicht den in eine zweite Ausführung der Halterung eingesetzten Datenträger,
- Fig. 11: einen Schnitt durch Fig. 10 und
- Fig. 12: schematisch die Herstellung der Datenträger.

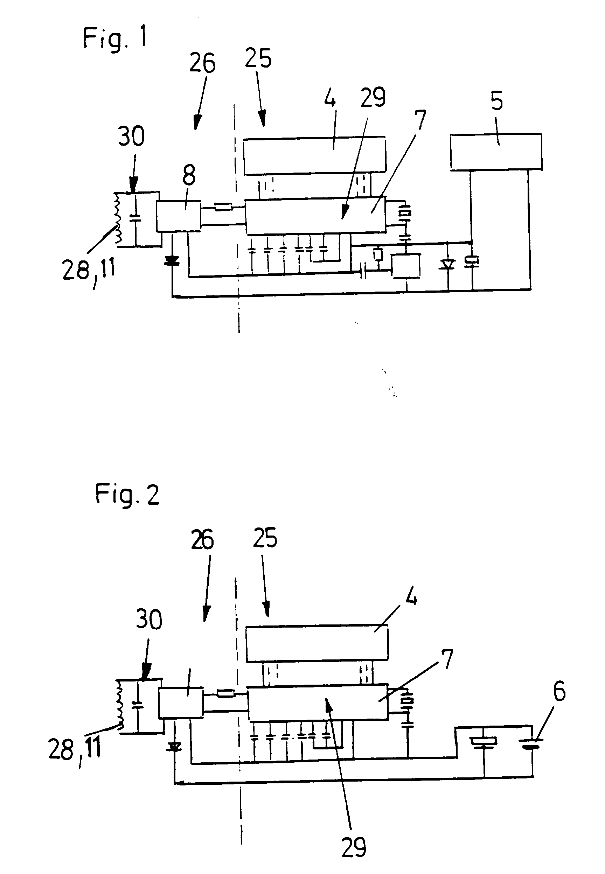

Wie aus Fig. 1 und 2 ersichtlich, umfaßt der Datenträger einen Digitalteil 25 und einen Analogteil 26. Der Digitalteil 25 weist eine Flüssigkristallanzeige 4, eine Einrichtung 29 zur Sichtbarmachung des Speicherinhaltes auf der Flüssigkristallanzeige 4 und eine Stromquelle auf, die in Fig. 1 durch eine Solarzelle 5 und in Fig. 2 durch eine Batterie 6 gebildet ist. Der Analogteil 26 weist einen Schreiblesespeicher oder EEPROM 8 und eine eine Antenne 11 bzw. eine Spule 28 umfassende Sendeempfangslogik auf, die der Datensendeempfangseinheit 30 des Datenträgers angehören. Die Stromversorgung des Analogteiles 26 erfolgt induktiv von einer in der nicht gezeigten Codier- und/oder Lesestation vorgesehenen zweiten Stromquelle, wobei auch die Energie über die Antenne 11 bzw. Spule 28 übertragen wird. Somit ist die Überprüfung des Datenträgers und die Bearbeitung des Speichers 8 nur mittels einer Lesestation möglich, die die dafür benötigte Energie bereitstellt. Dies ist von der Stromversorgung des Digitalteiles 25 unabhängig. Dessen Stromquelle 5,6 dient der Anzeige des Speicherinhaltes und dem Betrieb der dafür vorhandenen Einrichtung 29, die ein einfacher Controller sein kann, oder die einen vollwertigen Mikroprozessor 7 enthalten kann. Um Bedienungstasten zu erübrigen, kann vorgesehen sein, daß auf dem Flüssigkristalldisplay 4 verschiedene Informationsblöcke automatisch abwechseln, beispielsweise Uhrzeit, Datum, Gültigkeitszeitraum, usw.

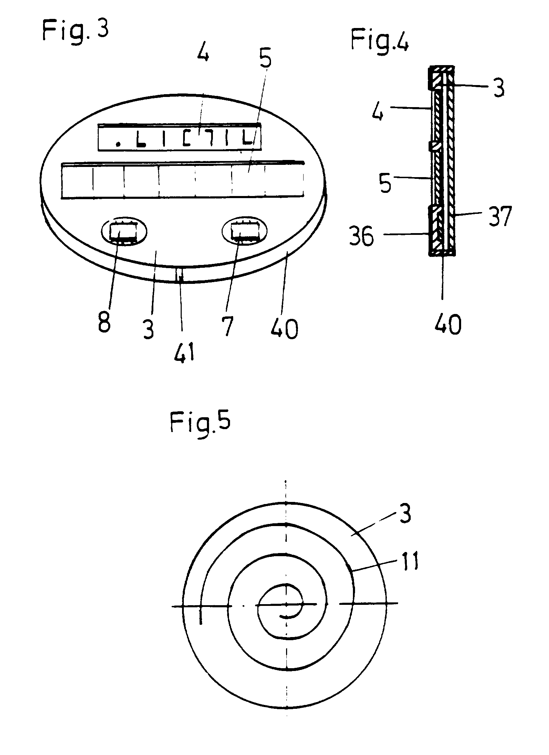

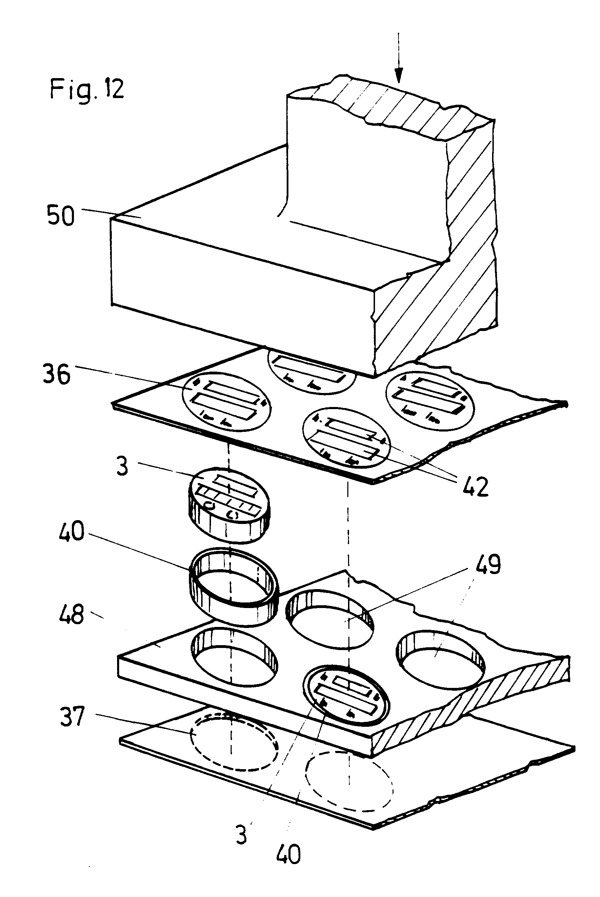

Gemäß Fig. 3 weist der Datenträger bevorzugt die Form einer runden Scheibe 3 auf, die umfangsseitig von einem metallischen Ring 40 eingefaßt ist. Der Ring 40 ist durch einen Schlitz 41 unterbrochen. Die Scheibe 3 nimmt in entsprechenden Vertiefungen ein Flüssigkristalldisplay 4, eine Solarzelle 5 (bzw. eine Reihe von Solarzellen), einen durch ein E²PROM gebildeten Speicher 8 und einen Mikroprozessor 7 auf. Mit Hilfe der Solarzelle 5 wird der für den Betrieb des Mikroprozessors 7, sowie des Flüssigkristalldisplay 4 benötigte Strom erzeugt, sodaß der Datenträger hinsichtlich der für die Anzeige benötigten Energie mit Ausnahme des Lichtes autark ist. Wie die Fig. 4 und 12 zeigen, sind beide Seiten der Scheibe 3 mit einer Schutzfolie 36,37 überzogen, wobei die Schutzfolie 36 Fenster 42 für das Flüssigkristalldisplay 4 und die Solarzelle 5 umfaßt, den Mikroprozessor 7 und den Speicher 8 hingegen abdeckt. An der Rückseite der Scheibe 3 ist spiralig die Antenne 11 aufgedruckt, wie aus Fig. 5 schematisch ersichtlich ist. Die Scheibe 3 kann ähnlich wie eine Münze (Fig. 3 bis 5) in einen Einwurfschlitz einer Codier- und Lesestation eingeworfen werden, wenn diese mit einer Sendeempfangseinheit versehen ist. Die Antenne 8 ist, wie erwähnt, Teil der Datensendeempfangseinheit, die nicht näher gezeigt ist, und kommuniziert dann mit der Sendeempfangseinrichtung im Bereich eines Einwurfschlitzes. Der metallische Ring 40 versteift die Scheibe 3, wobei aufgrund des Schlitzes 41 die Daten- und Energieübertragung möglich ist.

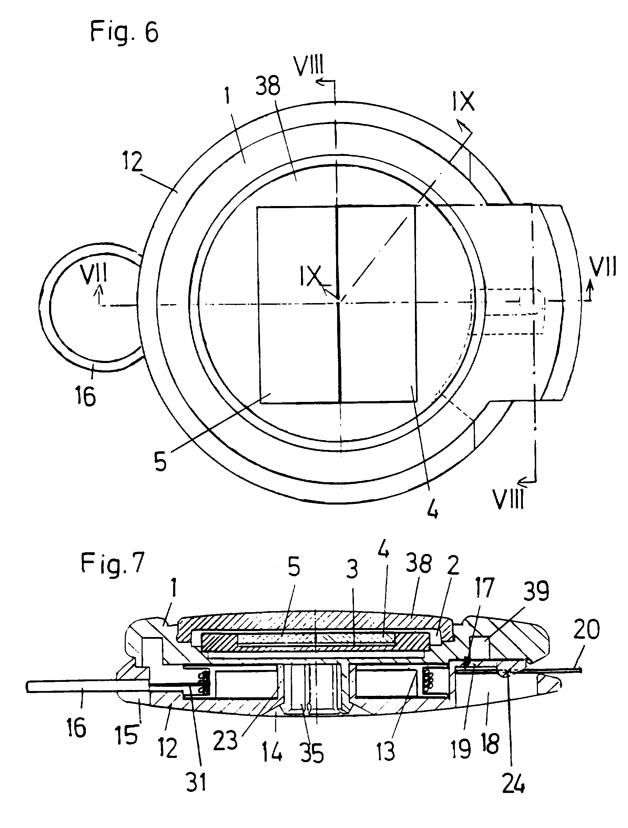

Die Scheibe 3 kann, wie Fig. 6 bis 11 zeigen, in eine aus einem Unterteil 12 und einen Oberteil 1 bestehende Halterung eingesetzt sein. Gemäß Fig. 6 bis 9 ist der Oberteil 1 mit einem elastischen, aus mehreren Laschen bestehenden Rastzapfen 35 versehen, der eine vom Unterteil 12 hochstehende Hülse 23 durchsetzt und eine Erweiterung 14 hintergreift. Die beiden Teile 1,12 sind gegeneinander begrenzt verdrehbar gehalten. Die Hülse 23 dient als Lagerachse für eine federbeaufschlagte Seilrolle 13, von der ein Seil 31 abziehbar ist, dessen freies Ende einen Befestigungsring 16 od.dgl. trägt. Der Ring 16 greift in eine Ausnehmung 15 des Unterteiles 12 ein, und ist dort lagefixiert gehalten. An der gegenüberliegenden Seite weist der Unterteil 12 eine Durchbrechung 18 auf, in der eine federnde Zunge 19 mit einer Haltenocke 24 angeordnet ist. Zwischen dem Oberteil 1 und dem Unterteil 12 ist in diesem Bereich ein Schlitz 17 ausgebildet, in den eine Karte 20 oder anderes flächiges Gebilde eingesteckt werden kann, das ein Loch aufweist. In das Loch greift die Haltenocke 24 der federnden Zunge 19, sodaß die Karte im Schlitz 17 fixiert ist. Die Karte 20 dient der Personalisierung des Datenträgers, in dem sie beispielsweise ein Foto des Besitzers trägt und gegebenenfalls auch mit den Stammdaten des Datenträgers optisch sichtbar bedruckt ist. Falls das Kontrollsystem auch Lesestationen mit Magnetstreifenlesern aufweist, kann die Karte auch mit dem Magnetstreifen versehen sein. Falls gewünscht, kann die Karte 20 in diesem Fall auch am Ring 16 fixiert sein. Um die Karte 20 in den Schlitz 17 einsetzen zu können, werden die beide Teile des Gehäuses so verdreht, daß die federnde Zunge 19 im Bereich der Ausnehmung 22 des Oberteiles 1 liegt und zum Oberteil 1 hin von der einzuschiebenden Karte verdrängbar ist. Wird der Oberteil 1 dann in die gezeigte Position zurückverdreht, so wird die federnde Zunge 19 in der Haltelage fixiert, in der sie am angepaßten Anschlag 21 des Oberteiles 1 anliegt.

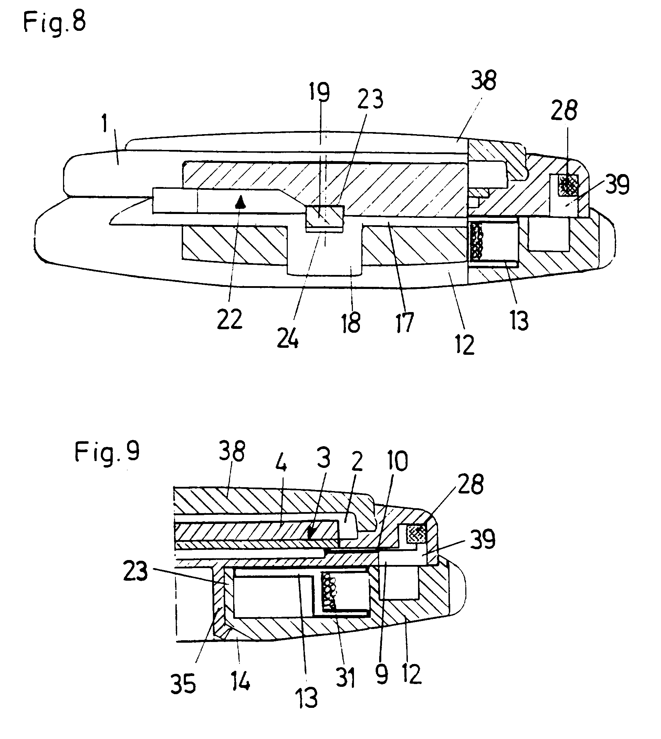

Im Oberteil 1 ist eine Vertiefung 2 ausgebildet, in der die in Fig. 3 und 4 beschriebene Scheibe 3 mit dem Flüssigkristalldisplay 4 und der bevorzugt vorgesehenen Solarzelle 5 untergebracht sind. Die Vertiefung 2 ist durch eine durchsichtige Abdeckung 38 verschlossen. Da aufgrund der nur kurzen, auf die Scheibe 3 aufgedruckten Antenne 11 die Reichweite der Sendeempfangseinrichtung zu gering sein kann, ist in einer Ringnut 39 des Oberteiles 1 die Spule 28 des Analogteiles 26 als Antennenverlängerung angeordnet. Die Verbindung 10 zwischen der Spule 28 und der Antenne 11 der Scheibe 3 liegt in einer Ausnehmung 9, wie in Fig. 9 gezeigt ist, und liegt beim Einsetzen der Scheibe 3 an Kontakte 10 an der Rückseite der Scheibe 3 an. Diese sind unterhalb der Schutzschicht 37 und werden vor dem Einsetzen der Scheibe 3 in die Vertiefung freigelegt.

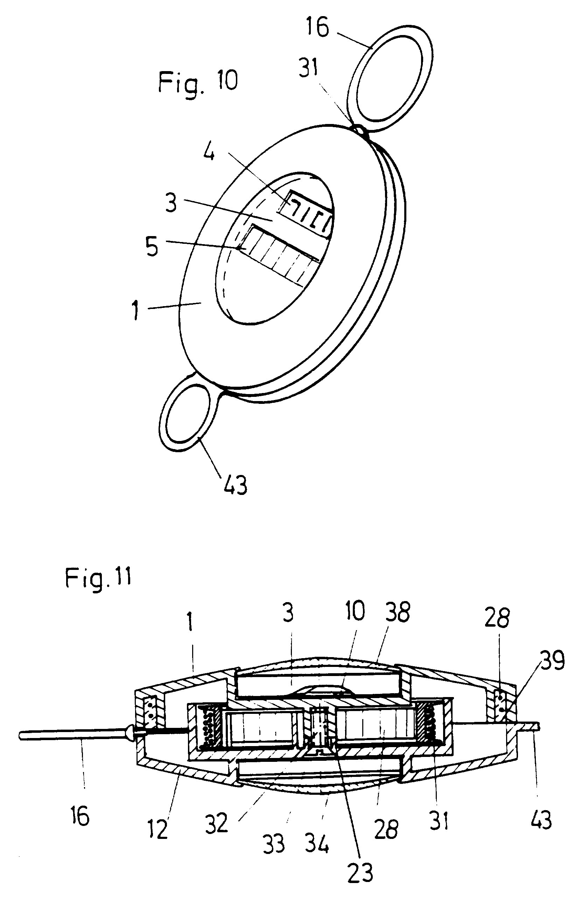

Wie Fig. 11 zeigt, können die beiden Teile 1,12 auch durch eine Schraube 27 verbunden sein. Beide Teile des Gehäuses tragen eine mittige Vertiefung, wobei in eine Vertiefung die Scheibe 3 und in die zweite Vertiefung eine Uhr 33 eingelegt ist. Beide Vertiefungen sind durch eine durchsichtige Abdeckung 38,34 verschlossen. Anstelle der Uhr 33 oder zusätzlich kann unter der Abdeckung 34 auch ein Foto des Inhabers angeordnet sein.

Fig. 10 und 11 zeigen einen am Unterteil 12 der Halterung angeordneten zweiten Befestigungsring 43, mit dessen Hilfe die Halterung ebenso wie mittels des Ringes 16 beispielsweie an der Kleidung des Trägers fixiert werden kann.

Die Herstellung der Datenträger kann in einfacher Weise dadurch erfolgen, daß in eine Löcher 49 aufweisende Trägerplatte 48 Ringe 40 und in diese Scheiben 3 eingelegt werden. Eine die Schutzschicht 37 bildende Folie, die bestückte Trägerplatte 48 und eine die Schutzschicht 36 bildende Folie, die die Fenster 42 enthält, werden in eine Form eingelegt und durch Druck mittels des schematischen Preßstempels 50 und Wärme zum beschichteten Datenträger verschmolzen. Der Ring 40 stanzt dabei beide Schutzschichten 36,37 aus der Folie aus.

## Patentansprüche

1. Datenträger zur Verwendung in Zutritts-, Identifikations- und/oder Kontrollsystemen, mit einer Datensendeempfangseinheit (30) zur Kommunikation mit mindestens einer Codier- und/oder Lesestation, mit einem nichtflüchtigen, elektrisch lösch- und programmierbaren Speicher (27), mit einer Sendeempfangslogik, die die Daten in den Speicher (27) einschreibt und aus dem Speicher (27) ausliest, mit einem Flüssigkristalldisplay (4), mit einer Einrichtung (29) zur Sichtbarmachung der im Speicher (27) enthaltenen Daten auf dem Flüssigkristalldisplay (4), und mit einer Einrichtung zur Stromversorgung, die eine im Datenträger angeordnete Stromquelle (5,6) aufweist, dadurch gekennzeichnet, daß die Stromversorgungseinrichtung aus zwei elektrisch voneinander unabhängigen Teilen besteht, deren erster Teil die im Datenträger angeordnete Stromquelle (5,6) ist, daß mit dem ersten Teil der Stromversorgungseinrichtung das Flüssigkristalldisplay (4) und die Einrichtung (29) zur Sichtbarmachung des Speicherinhaltes verbunden sind, und daß der zweite Teil der Stromversorgungseinrichtung durch ein der Sendeempfangslogik und dem Speicher (27) zugeordnetes kontaktloses Übertragungselement (28) zum Empfangen von Energie aus einer in der Codier- und/oder Lesestation vorgesehenen zweiten Stromquelle gebildet ist.

2. Datenträger nach Anspruch 1, dadurch gekennzeichnet, daß das kontaktlose Übertragungselement eine Magnetspule (28) umfaßt.

3. Datenträger nach Anspruch 1 oder 2, dadurch gekennzeichnet, daß der erste Teil der Stromversorgungseinrichtung eine Solarzelle (5) umfaßt.

4. Datenträger nach Anspruch 3, dadurch gekennzeichnet, daß er die Form einer Scheibe (3) aufweist, wobei an der einen Seite der Scheibe (3) das Flüssigkristalldisplay (4) und die Solarzelle (5) angeordnet sind, und an der zweiten Seite der Scheibe (3) eine spiralig angeordnete Antenne (11) der Datensendeempfangseinheit (30) aufgedruckt ist.

5. Datenträger nach Anspruch 4, dadurch gekennzeichnet, daß die beiden Seiten der Scheibe (3) mit einer Schutzfolie (36,37) überzogen sind, wobei die Schutzfolie (36) im Bereich des Flüssigkristalldisplays (4) und der Solarzelle (5) je ein Fenster (42) aufweist.

6. Datenträger nach Anspruch 4 oder 5, dadurch gekennzeichnet, daß der Umfang der Scheibe (3) von einem metallischen, durch einen Schlitz unterbrochenen Ring (40) eingefaßt ist.

7. Datenträger nach einem der Ansprüche 1 bis 6, dadurch gekennzeichnet, daß der Datenträger in eine Halterung (1,12) eingesetzt ist, die eine von einer Federspule (13) ausziehbare Schnur (31) aufweist.

8. Datenträger nach Anspruch 2 und 7, dadurch gekennzeichnet, daß in der Halterung (1,12) als Antennenverlängerung die Magnetspule (28) angeordnet ist, die an einen freiliegenden Kontakt der Antenne (11) anschließt.

## Claims

1. A data carrier for use in access, identification and/or checking systems, comprising a data transmitting-receiving unit (30) for communication with at least one encoding and/or reading station, a nonvolatile, electrically erasable and programmable memory (27), a transmitting-receiving logic which writes the data into the memory (27) and reads them out of the memory (27), a liquid crystal display (4), a means (29) for displaying the data contained in the memory (27) on the liquid crystal display (4), and a power supply means which has a power source (5, 6) arranged in the data carrier, characterised in that the power supply means comprises two electrically mutually independent portions of which the first portion is the power source (5, 6) which is arranged in the data carrier, that the liquid crystal display (4) and the means (29) for displaying the memory content are connected to the first portion of the power supply means, and that the second portion of the power supply means is formed by a contact-less transmission element (28) which is associated with the transmitting-receiving logic and the memory (27), for receiving energy from a second power source provided in the encoding and/or reading station.

2. A data carrier according to claim 1 characterised in that the contact-less transmission element includes a magnetic coil (28).

3. A data carrier according to claim 1 or claim 2 characterised in that the first portion of the power supply means includes a solar cell (5).

4. A data carrier according to claim 3 characterised in that it is in the form of a disk (3) wherein the liquid crystal display (4) and the solar cell (5) are arranged at the one side of the disk (3) and a spirally arranged antenna (11) of the data transmitting-receiving unit (30) is printed on the disk (3) at the second side thereof.

5. A data carrier according to claim 4 characterised in that the two sides of the disk (3) are covered with a protective foil (36, 37) wherein the protective foil (36) has a respective window (42) in the region of each of the liquid crystal display (4) and the solar cell (5).

6. A data carrier according to claim 4 or claim 5 characterised in that the periphery of the disk (3) is bordered by a metallic ring (40) which is interrupted by a slot.

7. A data carrier according to one of claims 1 to 6 characterised in that the data carrier is fitted into a holding means (1, 12) which has a cord (31) which can be pulled out of a spring coil (13).

8. A data carrier according to claim 2 and claim 7 characterised in that arranged in the holding means (1, 12) as an antenna extension is the magnetic coil (28) which connects to an exposed contact of the antenna (11).

## Revendications

1. Support de données destiné à être utilisé dans les systèmes d'accès, d'identification et/ou de contrôle, comprenant une unité d'émission et de réception de données (30) pour communiquer avec au moins une station de codage et/ou de lecture, une mémoire (27) non volatile, électriquement effaçable et programmable, une unité logique d'émission et de réception, qui enregistre et lit les données dans la mémoire (27), un afficheur à cristaux liquides (4), un dispositif (29) permettant de visualiser les données contenues dans la mémoire (27) sur l'afficheur à cristaux liquides (4), et un dispositif d'alimentation en énergie, qui présente une source d'énergie (5, 6) située dans le support de données, caractérisé en ce que le dispositif d'alimentation en énergie est composé de deux parties électriquement indépendantes l'une de l'autre, dont la première partie est la source d'énergie (5, 6) située dans le support de données, en ce que l'afficheur à cristaux liquides (4) et le dispositif (29) pour la visualisation du contenu de la mémoire sont raccordés à la première partie du dispositif d'alimentation en énergie, et en ce que la deuxième partie du dispositif d'alimentation en énergie est formée par un élément de transmission (28) sans contact, associé à l'unité logique d'émission et de réception et à la mémoire (27) et destiné à recevoir de l'énergie provenant d'une deuxième source d'énergie prévue dans la station de codage et/ou de lecture.

2. Support de données selon la revendication 1, caractérisé en ce que l'élément de transmission sans contact comprend une bobine magnétique (28).

3. Support de données selon la revendication 1 ou 2, caractérisé en ce que la première partie du dispositif d'alimentation en énergie comprend une cellule solaire (5).

4. Support de données selon la revendication 3, caractérisé en ce qu'il présente une forme de disque (3), l'afficheur à cristaux liquides (4) et la cellule solaire (5) étant placés sur l'un des côtés du disque (3), et une antenne (11) de l'unité d'émission et de réception des données (30) est imprimée en forme de spirale sur le deuxième côté du disque (3).

5. Support de données selon la revendication 4, caractérisé en ce que les deux côtés du disque (3) sont revêtus d'une feuille de protection (36, 37), la feuille de protection (36) étant munie d'une fenêtre (42) dans les zones respectives de l'afficheur à cristaux liquides (4) et de la cellule solaire (5).

6. Support de données selon la revendication 4 ou 5, caractérisé en ce que la périphérie du disque (3) est cerclée par une bague métallique (40), interrompue par une fente.

7. Support de données selon l'une quelconque des revendications 1 à 6, caractérisé en ce que le support de données est inséré dans un système de maintien (1, 12), qui est muni d'un cordon (31) qui peut se dérouler d'une bobine à ressort (13).

8. Support de données selon les revendications 2 et 7, caractérisé en ce que la bobine magnétique (28) est placée dans le système de maintien (1, 12) en tant qu'extension de l'antenne, ladite bobine magnétique étant raccordée à un contact non revêtu de l'antenne (11).
